# EUROPEAN PATENT APPLICATION

(11) **EP 2 717 208 A1**
(43) Date of publication of application: **09.04.2014**
(21) Application number: 12187382.2
(22) Date of filing: 05.10.2012
(51) Int. Cl.: G06Q 30/02, G06F 21/62

(54) **System solution for derivation and provision of anonymised cellular mobile network data for polulation density and mobility report generation**

(71) Applicant: Vodafone Holding GmbH, 40213 Düsseldorf (DE); Vodafone Libertel B.V., 6221 KX Maastricht (NL)
(72) Inventor: Cober, Mathias, 6102 VG Echt (NL); Van der Zande, Alexander Willem, 6225 EK Maastricht (NL); Schuncken, Roger Peter Theodorus Jozef, 6121 HJ Born (NL)
(74) Representative: Jostarndt, Hans-Dieter

(57) **Abstract**

A system solution for derivation and provision of anonymised cellular mobile network data for population density and mobility report generation is proposed which can be implemented on a computer, e.g. in a data warehouse system. The solution includes effective anonymisation measures to protect the privacy of the mobile network customers. It comprises a load extractor and a database production environment, where the load extractor is connected with the mobile network to receive and anonymise traffic data from a mobile communications network, and where the production environment is set up to allow a third party to query the traffic data for the purpose of population density and mobility report generation. The production environment of the solution presents itself as a "black box", which can be operated by the third party only via specific interfaces. Thus, the solution can be operated by a third party without compromising the privacy of the mobile network users.

## Description

### Field of the invention

The invention relates to a method and system for determination of statistical data about people positions and movements as well for generation of population density reports and/or population mobility reports, where data from a cellular mobile communications network is used, and where mobile devices of users of said mobile communications network are uniquely identifiable.

Insight into population density and mobility allows to answer questions such as e.g. "How many people visit a city centre or a large event, where do they come from, via which route do they travel, how long - on average - do they stay?"

Such statistical spatiotemporal population information is very useful to various organisations and institutions such as e.g. city councils, provinces and national governmental institutions. There is a growing need for population density and population mobility reports for planning purposes of such institutions. Population density and mobility reports, respectively the information conveyed therein, can be used to address issues related to e.g. safety, traffic, infrastructure and city marketing.

Such data can also be used for valuation of geographic locations regarding marketing of goods and/or services. The target of the valuation can be determined by the respective business function and includes besides marketing of goods and/or services the functional areas of sourcing, production, administration, and/or personnel.

Hence it is possible to derive e.g. indicators for determination of the market value of real estate and buildings with respect to site of a store at a street or within a shopping centre or with respect to attractiveness respectively acceptability of place of location for advertising space aided by population density data and/or population mobility data.

A further application of population density information and of population mobility information is radio network design of a mobile radio network.

### State of the art

Today population density and mobility is mainly determined by manually performed counting operations, which tend to be very expensive and are hence undertaken only on specific needs as e.g. in the planning phase of a larger infrastructure project and/or at specific locations of high importance such as e.g. airports or city centres.

Also, population density is estimated automatically or semi-automatically by some sort of interpolation and averaging over space and time of the manually collected (unfortunately sparse) data. This estimated data is by its nature not very precise, and it does not exist for all geographic areas of interest.

Population mobility data is even harder to generate, because it requires some sort of correlating people counts at spatially and temporarily neighbouring instances of space and time. Also, population mobility cannot be estimated well by interpolation and averaging.

As a consequence, there is a severe lack of information today: The population density information that is available is not comprehensive and in many cases not precise. The situation is even worse regarding population mobility information; such information does almost not exist at all.

Cellular mobile communications networks, specifically networks according to a mobile network standard such as the GSM, GPRS, UMTS and/or the LTE radio network standards (GSM: Global System for Mobile Communications; GPRS: General Packet Radio Service; UMTS: Universal Mobile Telecommunications System; LTE: Long Term Evolution) are nowadays widely used.

Cellular mobile networks of that type comprise a manifold of transceiver stations which determine by its radio coverage so called radio cells. The geographical locations of the radio cells respectively the geographical locations of the transceiver stations which determine the radio cells of the cellular network are known, at least to the operator of the mobile network. This allows to identify the location of active users of a cellular mobile network, because a user that gets serviced by a specific transceiver station of known location must be located within the according radio cell.

When a customer actively uses a communications network (e.g. places or receives a phone call), this triggers so called "events", which are captured within the network as traffic data. Traffic data of a communications network thus contains at least identifying information regarding the customer, together with information about when a customer actively uses the communications network.

In case the communications network is a cellular mobile network, traffic data contains also at least approximate information about where a customer uses the network.

It is known, that traffic data from a cellular mobile communications network can be collected and utilized to generate estimates of people densities regarding certain areas or location. It also has been proposed, to utilize traffic data of a cellular mobile communications network to generate population mobility data.

The mobile communications network traffic data which can be utilized to generate statistical data about the users typically contains so called personal identifiers (PID), i.e. data elements which allow to personally identify the individual users (such as e.g. the MSISDN of the person or the IMEI of the mobile phone of that person).

Such personal identifiers represent sensitive information, which needs to be treated with great care to ensure that the privacy of the users of the network is ensured anytime. To alleviate this issue, the personal identifiers can be "anonymised", or "de-personalised". This means that the original identifier is replaced with a transformed identifier. The idea behind this transformation is, that the transformed identifier does not identify the original subject (e.g. person or mobile phone of that person) anymore. The process to prevent direct identification of subjects by changing the personal identifiers contained in data records such that these do not identify the original subject anymore is termed "direct anonymization". Direct anonymization is widely used in applications where the protection of privacy is important, and it has been also proposed to be utilized in systems for collection of people positions for statistical evaluations, where data from mobile communications network events is utilized.

To make sure that the direct anonymization process is irreversible, secure hash algorithms which use encryption keys have been proposed. The direct anonymization is termed irreversibly if it is impossible to identify the original personal information from the de-personal information without taking into account other information than the identifiers.

The primary business of a mobile network operator is operating the mobile network, to enable their customers (mobile phone users) to communicate with each other (and/or with customers of other mobile or fixed network operators) using mobile devices, e.g. mobile phones. For this purpose a mobile network operator typically has a direct business relationship with the mobile phone users.

The traffic data which is generated during the operation of a network can be beneficially used to generate statistics and further aggregated e.g. to population density reports. However, as this sort of data mining and statistics generation is not the original primary business of a mobile network operator, a mobile network operator may wish to provide the traffic data to a third party who then actually performs the statistics and report generation out of the provided traffic data.

### Summary of the invention

The traffic data includes personal and (at least potentially) personally identifying information, which shall not be made available to the third party. On the other hand, identifying information as part of the traffic data is very useful to the third party, because it allows to "track" devices through space and time. Without any information which is suitable to identify single devices, it would not be possible to aggregate the information which is needed to generate population mobility reports.

So an objective of the present invention is to provide a system solution and a method to operate the solution which allows a mobile network operator to enable a third party to generate population density and mobility reports based on mobile network traffic data in such a way that the privacy of the individual customers of the mobile network is guaranteed at all times.

It is a further objective of the invention to provide the third party with an environment to develop, debug and test queries on realistic mobile network traffic data in such a way that the privacy of the of the individual customers of the mobile network is guaranteed at all times.

The objective is achieved by a system solution according to claim 1, a method according to claim 12 and by a computer program according to claim 15. Embodiments of the system solution, the method and the computer program are given in the dependent claims.

According to a first aspect of the invention, a system solution for derivation and provision of anonymised cellular mobile network data for population density and mobility report generation is proposed which can be implemented on a computer, e.g. in a data warehouse system.

The solution comprises a load extractor and a database production environment, where the load extractor is connected with the mobile network and the production environment, and is configured to perform at least the functions of
(i) receiving event data (such as e.g. call detail records and/or event detail records) comprising identifiers and other data from the mobile network,
(ii) anonymising the identifiers of the event data,
(iii) transmitting the event data with anonymised identifiers (respectively the anonymised event data) to the database production environment,
and where the production environment comprises at least
(i) an anonymised event data table, which is configured to hold anonymised event data,
(ii) a derived data table, which is configured to hold derived data,
(iii) programmable query processing means, which is configured to store queries and issue query requests regarding data contained in the anonymised event data table and/or the derived data table,
(iv) a query processing import interface, configured to import queries to the programmable query processing means from outside the database production environment,
(v) a query trigger interface to trigger query requests of the programmable query processing means from outside the database production environment,
(vi) counting means, configured to perform counting operations within the derived data table,
(vii) a result export interface configured to export the results of the counting operations outside the database production environment,
and where the solution comprises functionality for user rights management, to allow a user or a group of users access to the query processing import interface, the query trigger interface and the result export interface while at the same time disallow any direct reading, writing or executing access to the load extractor, the anonymised event data table, the derived data table, the counting means and the validation means.

Such a solution allows utilizing the mobile network usage information which is available at the mobile network side in the form of event data (SGSN and MSC events) for purposes of data mining in general and specifically for population density and mobility report generation by a third party, without compromising the privacy of the mobile network users.

The privacy protection is guaranteed by a combination of the following measures which work synergistically together:
(i) the direct anonymization of the event data performed by the load extractor, which ensures that single event records do not contain any personal identifying information
(ii) the architecture of the system which does neither export event data nor derived data, but only results of counting operations on the derived data, and
(iii) the user rights management which makes it possible to protect all sensitive parts of the production environment from being accessed by unauthorized users of the solution.

To a third party who uses the solution, the production environment appears as a "black box", which can be operated only via the interfaces opened to the third party. So the third party can create and run meaningful queries (via the query import interface and the query trigger interface) at the production environment on the traffic data of the mobile network and thus can generate meaningful results of counting operations which can be retrieved via the result export interface. The results can be aggregated by the third party to create precise population density and mobility reports.

Because the environment is provided as "black box", the third party has no insight into the environment data, and is thus prevented from seeing the traffic data itself, as well as from seeing the derived data.

The privacy protection can be further improved by utilization of validation means (VM) which ensure that the results of the counting operations on the derived data are not suitable to indirectly identify any of the users. Hence, in an advantageous embodiment the production environment (PE) comprises also validation means (VM), configured to decide if export of the results of the counting operations would be in compliance with privacy requirements, and where the production environment (PE) is configured to export the results of the counting operations via the result export interface (DCI) only in case that the validation means (VM) have decided that output of the counting operations would be in compliance with privacy requirements.

In a preferred embodiment the validation means (VM) decide that export of the results of the counting operations would be in compliance with privacy requirements only when the output of the counting operation exceeds a predetermined threshold. In an advantageous embodiment the load extractor does include only event data records which contain location information (cell-id information), and includes only specific useful fields of the event data records, such as e.g. timestamp, event type, cell-id, and the anonymised user identifier) and discards all other not relevant fields. This has the advantage that storage and processing requirements on the production environment are minimized.

To comply with public opinion and legal requirements, it is advantageous to configure the database production environment such that anonymised event data which is older than a specified period of time, will be automatically deleted from the database production environment, respectively from the anonymised event data table.

Preferably this deletion time period is configurable by the mobile network operator. A time period between 20 to 80 days, e.g. of 35 days is sufficiently long to yield reliable data and robustness against outliers (e.g. days with special events, unusual weather conditions, or other causes for change of population density and mobility) and at the same time sufficiently short to satisfy legal requirements and compliance with public opinion.

It is further advantageous if the load extractor performs the anonymization of the event data by using a secure hash algorithm to anonymise the identifiers. This will make sure that the direct anonymization process is irreversible. As long as the encryption key that is used for the secure hash algorithm is the same, the algorithm will generate the same anonymised identifier for the same original identifier. It is therefore advantageous to change the encryption key frequently, to further improve the privacy of the traffic data used in the solution.

Preferably the change frequency for the encryption key is configurable by the mobile network operator. A frequency between 1 week and 3 months, e.g. 1 months can be deemed sufficient frequent to satisfy legal requirements and compliance with public opinion.

It is also advantageous if the database production environment comprises a control data export interface configured to export control data regarding the status of the production environment outside the database production environment. This enables the user of the solution to understand the state of the production environment.

In this context control data is understood as data which gives insight into the system, specifically into the production environment like number of tables, table names, number of queries, query names, query definitions, cpu usage, storage (table space usage) and memory status. It is advantageous to select the set of control data depending on need, data availability and effort to deliver. Control data does not give any insight into table contents and it specifically does not include any type of personally identifiable information, event data or derived data.

Although direct identification of individuals based solely on the event data can be made impossible by means of the direct anonymization using a secure hash algorithm, it might still be possible to indirectly identify an individual. With indirect identification it is meant to combine the event data with other data about the individual and use this combination to deduce the identity of the individual.

To prevent any direct or indirect identification of individuals, neither the event data nor the derived data can be entered, viewed, downloaded or otherwise directly accessed by the third party. The third party is only enabled to perform counting operations on the derived data which result in pure numbers as output. To prevent any possibility that this output can be utilized to indirectly identify an individual, it is advantageous if the validation means decide that export of the results of the counting operations would be in compliance with privacy requirements only when the output of the counting operation meets or exceeds a predetermined threshold.

Preferably this threshold is configurable by the mobile network operator. According to legal insights and public opinion a threshold value between 5 and 30, e.g. a threshold value of 15, is sufficiently large to satisfy the requirement that identification of an individual by means of the output data shall be effectively prevented.

It is advantageous if the database production environment further comprises a reference data table, which is configured to hold reference data, a reference data interface, configured to upload reference data to the reference data table from outside the database production environment, and the programmable query processing means is configured to issue query requests regarding also the data contained in the reference data table.

Reference data can be any sort data that the third party gathers or produces and wishes to include in queries to produce enriched derived data. In this context it is especially advantageous if the reference data includes cell plan data which describes the radio cells and the corresponding coverage areas of the radio cells of the mobile network. The reference data can also relate e.g. to geographically distribution of demographic indicators, e g. average income of a person, age or any other information which is suitable to derive enriched derived data by getting queried together with the event data and the already existing derived data.

Generally, the inclusion of reference data in the queries can lead to richer derived data and thus to more meaningful output data and more meaningful aggregated output. As a consequence, enabling the third party to incorporate reference data into the production environment enables the third party to produce deeper insights into population density and mobility.

It is further advantageous if the system further comprises a separate environment, where the third party can develop and test the queries on a dummy set of events before executing them on the full set of anonymised events in the closed production environment. This is especially advantageous, when the separate environment is open to the third party, so that the operation can be fully debugged and the data is fully visible to the third party.

From a test and debug perspective, the optimum would likely be an environment identical to the production environment with identical data. Building an identical or at least an essentially identical test environment does not pose any problems. However, the event data and the derived data must not be identical, for the privacy reasons that have been discussed before. It is proposed to provide instead event data for the purpose of testing in the test environment which is sufficiently modified to guarantee privacy, but has still similar statistical characteristics as the event data which is available in the production environment.

To achieve these features, another beneficial embodiment of the invention comprises in addition to the first load extractor a second load extractor having an input interface and an output interface, and a database test environment to enable a third party to develop and test queries with realistic data, where the second load extractor is at the input interface connectable with the mobile network or with the anonymised event data table of the production environment to receive event data, and connectable at the output interface with the test environment, where the second load extractor is configured to perform at least the functions of (i) receiving event data comprising identifiers, timestamps and other data either directly or indirectly from the mobile network, (ii) selecting samples of the event data, (iii) anonymising the identifiers of at least the selected samples of the event data, at least in case the identifiers are not already anonymised, (iv) modifying the dates in the timestamps of the events, (v) transmitting the sampled event data with anonymised identifiers and modified timestamps to the database test environment.

This second load extractor provides the test data for the test environment on the basis of the actual data such that the data has still similar statistical properties, which makes it a good set for testing and debugging purposes. At the same time the steps of sample selection, anonymization and timestamp modification guarantees that the privacy of the mobile network users is maintained.

Regarding the sample section it is advantageous to make a selection on the mobile network customers and on time periods, so that the subset still contains coherent data. This improves the fitness of the selection for the purpose of developing and testing queries which are directed towards population mobility. For example the second load extractor can perform the following steps for sample selection: (i) randomly select a week out of the previous month and (ii) randomly select a subset of some percentage of all mobile network customers. The size of the subset can be chosen in a wide range, preferably a percentage between 1 % and 50% of the mobile network customers is chosen. In a typical embodiment the data of about 5% of the customers is selected. Also, the selection of a random week out of the previous month is just one example out of many possibilities to choose a selection on a time period. Depending on the type of report which is sought, shorter or longer periods of time than a week can be selected out of longer or shorter periods of time than a month. The selection according to step (ii) can also be performed partially deterministic. For example it is advantageous to allow users of the mobile network to opt-out of the service; data from these users should not be extracted by any of the load extractors to the solution (neither the production nor the test environment). It can also be advantageous to allow users of the mobile network to explicitly opt-in to have their data used in the system without full anonymization, and data of these users can be selected always or with a higher priority than data of the "normal" users.

Regarding the time stamp modification it is advantageous to replace the dates with dummy dates which fall into the same day of the week and leave the time at the day intact. Also, it is advantageous to change the date for each mobile customer in the same way for all events that occurred at the same day. This will preserve the coherence of the event data, so that the sample data still contains pattern of realistic movements of individuals.

The third party can use the limited set of fully anonymised data as it is provided by the second load extractor to the test environment to develop scripts, queries and reports. Once ready, final scripts, queries and reports can be transferred to the production environment where they can be executed on the full set of event data.

The test environment is in this beneficial embodiment built up essentially similar to the corresponding production environment. It comprises specifically at least (i) a sample event data table, which is configured to hold sample event data (SED), (ii) a sample derived data table, which is configured to hold sample derived data, and (iii) secondary programmable query processing means (SPQPM), which is configured to store queries and issue query requests regarding data contained in the sample event data table (SEDT) and/or the sample derived data table (SDDT). It is also possible in the test environment to enter and run queries manually. A developer from the third party can debug the test system so that all processes within the test environment are fully transparent to the developer. Specifically a query developer will enter test queries manually. Derived data is also typically available in the test environment (TE), specifically in case it is provided as well in the production environment (PE). It is also advantageous if the solution comprises means to transfer/copy reference data from the test environment to the production environment.

When in use, the sample event data table is filled with sample event data that has been provided by the second load extractor.

To enable the third party to fully debug the test environment, the user rights management system of the solution is further set up to allow a user or a group of users of a third party access to the database test environment including the sample event data table, the sample derived data table and the secondary programmable query processing means. At the same time the third party is disallowed any direct reading, writing or executing access to the second load extractor, to prevent the third party from accessing not sufficiently anonymised event data.

It is also advantageous if the test environment comprises a control data export interface configured to export control data regarding the status of the test environment outside the test environment. This enables the user of the solution to understand the state of the test environment. It is advantageous to select the set of control data depending on need, data availability and effort to deliver.

It is also advantageous if the solution comprises means to transfer queries from the test environment to the production environment. This would allow the third party to transfer the queries that had been developed and tested at the test environment very easily to the production environment in order to execute them there on the full event data set.

It is also advantageous if both, the database production environment and the test environment are hosted in the same data warehouse system, because this allows a tighter integration between the two environments, and eases data transfer between the two environments as well as user and user rights management. Also, as a result of similar hardware, software versions and software releases no issues will arise with respect to un-synchronised environments.

According to a second aspect of the invention, a method for derivation and provision of anonymised cellular mobile network data for population density and mobility report generation is proposed which can be implemented on a computer, e.g. in a data warehouse system.

The method comprises
- receiving event data comprising identifiers and other data from a mobile network,
- anonymising the identifiers of the event data,
- transmitting the anonymised event data to a database production environment and holding this data in at least one anonymised event data table,
- importing at least one query regarding at least data contained in at least one anonymised event data table to a programmable query processing means from outside the database production environment and storing the query in the programmable query processing means,
- triggering a query request to issue an in the programmable query processing means stored query regarding at least one anonymised event data table,
- storing the result of the query request as derived data at a derived data table,
- performing a counting operation within the derived data table (DDT) and exporting the result of the counting operation outside the database production environment.

According to a further aspect of the invention, a computer program is proposed which includes software commands for executing the method and its embodiments, when the computer program is executed in a data processing system, e.g. in a data warehouse system.

### Brief description of the drawing figures

The invention will be further described with reference to the figures which show embodiments of the invention. In the figures it is shown:

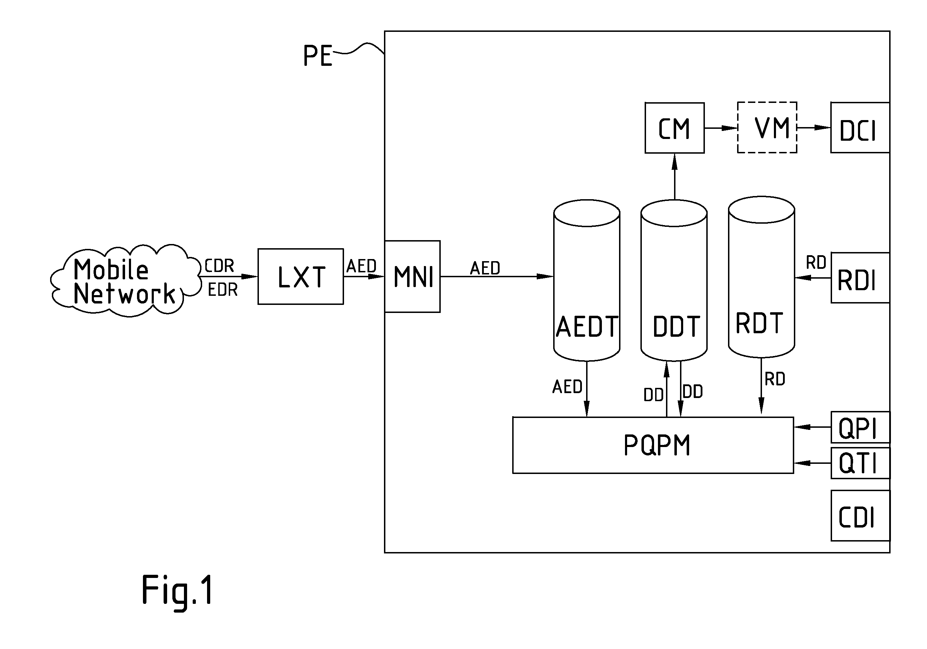

- Fig. 1:: A schematic view of an embodiment of a system solution for derivation and provision of anonymised cellular mobile network data for population density and mobility report generation by a third party, according to the invention, including a load extractor connected with a mobile network, and a database production environment;

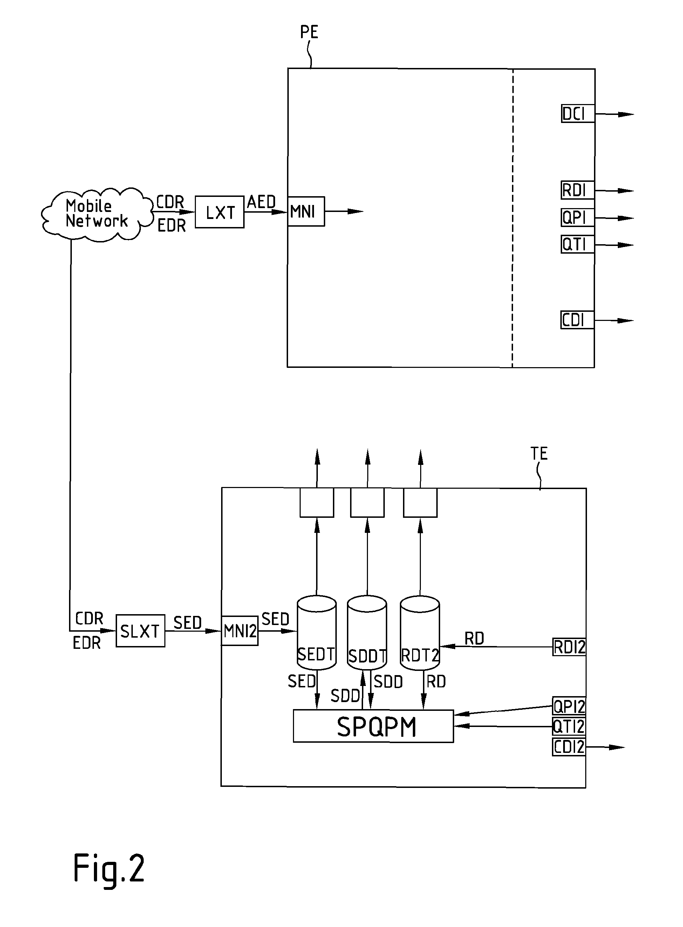

- Fig. 2:: A schematic view of another embodiment of a system solution for derivation and provision of anonymised cellular mobile network data for population density and mobility report generation by a third party, according to the invention, including a first load extractor, a second load extractor, production environment and a test environment;

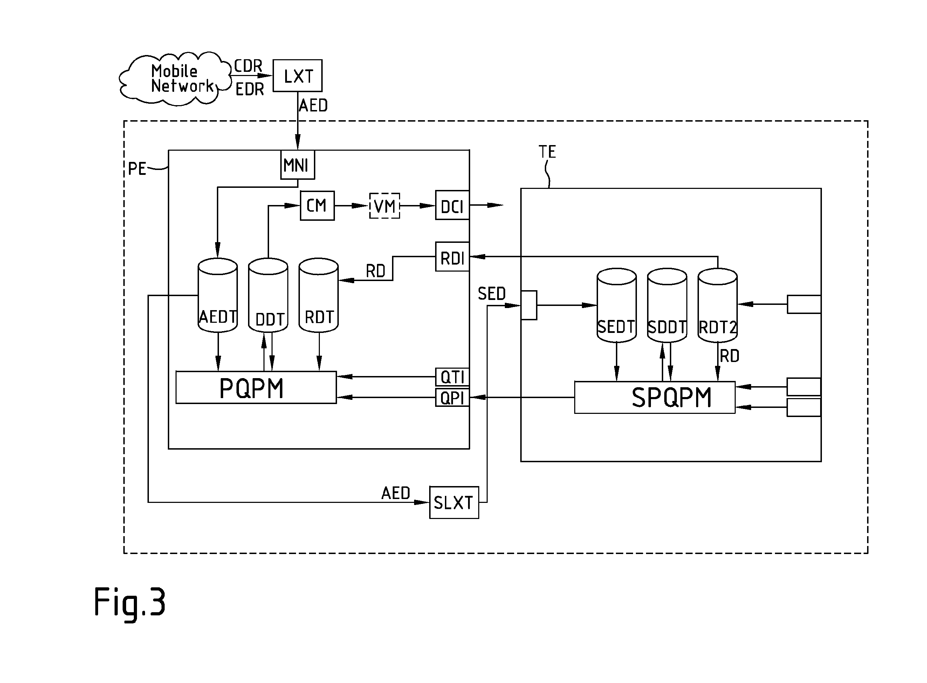

- Fig. 3:: A schematic view of another embodiment of a system solution for derivation and provision of anonymised cellular mobile network data for population density and mobility report generation by a third party, according to the invention, including a first load extractor, a second load extractor, production environment and a test environment; where the second load extractor, the productive environment and the test environment are implemented in the same data warehouse system.

### Detailed description of the drawing figure(s)

Fig. 1 shows a system for provision of mobile network data for population density report generation and/or mobility report generation according to the invention. The system compromises a database production environment (PE) having various interfaces to import and export various types of data. The production environment (PE) further comprises various database tables to hold the different types of data. It also comprises various means for processing the data which is held in the various database tables (Query, Count, Validate).

The system further comprises a load extractor (LXT), which is capable to interface with a mobile network to extract event data from the network such as call detail records (CDR) or event detail records (EDR), transform the event data from the network into anonymised event data (AED) and provide this to the database environment (PE) at its mobile network facing interface (MNI). The load extractor (LXT) is shown residing outside the production environment (PE) here, but it is clear that it also can reside inside the production environment (PE).

On the left side within the database environment (PE) there is a table shown named anonymised event data table (AEDT), which is configured to hold anonymised event data (AED), which will be imported by the system from at least one mobile network via the mobile network facing interface (MNI).

Right from the anonymised event table a second table is shown named derived data table (DDT), which is configured to hold derived data (DD). Of course, there can also be multiple derived data tables present. Derived data (DD) contains data which will be derived within the database production environment (PE) as result of querying the data which is available within the database production environment (PE). This available data includes specifically (but is not restricted to) the data kept in the anonymised event data table (AEDT) and the derived data table (DDT) itself.

On the right side of the production environment a third table, a reference data table (RDT) is shown. Of course, there can also be multiple (or none) reference data tables present. The reference data table is configured to hold reference data (RD) which can be uploaded to the table via the reference data interface (RDI).

At the bottom within the database production environment (PE) a functional block of programmable query processing means (PQPM) is shown, which interfaces via a query processing import interface (QPI) and a query trigger interface (QTI) to the outside and interfaces internally with the data tables of the database production environment (PE). It is possible to import specific queries (written in a suitable query language) via the query processing interface (QPI) to the programmable query processing means (PQPM) and to initiate specific query requests via the query processing interface (QTI). Once a specific query is initiated, the programmable query processing means (PQPM) runs the query on the data tables and saves the result of the query in a derived data table (DDT).

At the right bottom the control data interface is shown, which allows the user of the system to retrieve control data such as cpu usage and memory usage about the production environment. It is not possible to retrieve any of the data kept in the various tables through this interface.

To preserve the privacy of the mobile network users, the results of the queries which are saved as derived data (DD) in the derived data table (DDT) cannot be observed directly by the third party. Instead counting operations on the derived data (DD) can be performed by the counting means (CM). The result of the counting means (CM) can optionally be validated by the optional validation means (VM) with regard to the size of the result. In case the result of the counting operation is for example 15 or higher, the counting result is presented at the validated count interface (DCI). It is also possible to output the result of the counting operation without any further validation.

Fig. 2 shows a schematic view of another embodiment of a system solution for derivation and provision of anonymised cellular mobile network data for population density and mobility report generation by a third party, according to the invention, including a first load extractor (LXT), a second load extractor (SLXT), production environment (PE) and a test environment (TE).

Production environment (PE) and load extractor (LXT) are not differing in function from the corresponding entities in Fig. 1. However, the production environment (PE) is here shown as black box as it is seen by the third party. The third party can operate the production environment only via the interfaces on the right side (DCI, RDI, QPI, QTI, CDI). The internals of the production environment as well as the mobile network interface (MNI) is not disclosed to the third party.

Under the production environment (PE) the test environment (TE) is shown. It looks similar to the production environment (PE), but it operates with the sampled event data instead of the full event data, and all internals of the test environment are visible and accessible to the third party.

The system further comprises a second load extractor (SLXT), which is capable to interface with a mobile network to extract event data from the network such as call detail records (CDR) or event detail records (EDR), transform the event data from the network into sampled event data (SED) - after applying all relevant measures as described before - and provide this to the test environment (TE) at its mobile network facing interface (MNI2). The second load extractor (SLXT) is shown residing outside the production environment (PE) and the test environment (TE) here, but it is clear that it also can reside inside the production environment (PE) or at least partly inside the test environment (TE).

On the left side within the test environment (TE) there is a table shown named sampled event data table (SEDT), which is configured to hold sampled event data (SED), which will be imported by the system via the mobile network facing interface (MNI2).

Right from the anonymised event table a second table is shown named sample derived data table (SDDT), which is configured to hold sample derived data (SDD). Sample derived data (SDD) contains data which will be derived within the test environment (TE) as result of querying the data which is available within the test environment (TE). Note, that instead of exactly one sample derived data table (SDDT), also multiple sample derived data tables are possible to reside within the test environment (TE).

On the right side of the production environment a third table, a reference data table (RDT2) is shown. Note, that instead of exactly one reference data table, also none or multiple reference tables are possible to reside within the test environment (TE). The reference data table is configured to hold reference data (RD) which can be uploaded to the table via the reference data interface (RDI2).

At the bottom within the test environment (TE) a functional block of secondary programmable query processing means (SPQPM) is shown, which interfaces via a query processing import interface (QPI2) and a query trigger interface (QTI2) to the outside and interfaces internally with the data tables of the database production environment (TE). It is possible to write/develop or import specific queries (written in a suitable query language) via the query processing interface (QPI2) to the programmable query processing means (PQPM) and to initiate specific query requests via the query processing interface (QTI2). In the test environment (TE) it is also possible to run unscheduled queries. For example a developer with access to the test environment can run an ad hoc query manually. Once a specific query is initiated (ad hoc or scheduled), the secondary programmable query processing means (SPQPM) runs the query on the data tables and saves the result of the query in the sample derived data table (SDDT).

At the right bottom the control data interface (CDI2) is shown, which allows the user of the system to retrieve control data such as cpu usage and memory usage about the test environment.

On top of the test environment (TE) three interfaces are indicated to highlight, that the content of all tables within the test environment (TE) is (as opposed to the content of the tables in the production system (PE)) available to the third party.

Fig. 3 shows a schematic view of another embodiment of a system solution for derivation and provision of anonymised cellular mobile network data for population density and mobility report generation by a third party, according to the invention, including a first load extractor (LXT), a second load extractor (SLXT), production environment and a test environment; where the second load extractor (SLXT), the productive environment (PE) and the test environment (TE) are implemented in the same data warehouse system (indicated by the dashed line, surrounding PE, TE and SLXT.

Here, the second load extractor (SLXT) extracts the sample event data (SED) not directly from the mobile network as in the embodiment depicted in Fig.2, but instead directly from the anonymised event data as it is available in the production environment (PE).

Also, the queries that have been successfully tested in the test environment (TE) can be exported from the secondary programmable query processing means (SPQPM) via the query processing interface (QPI) to the production environment's programmable query processing means (PQPM). Also any reference data (RD) residing within the test environment (TE) can be exported to the production environment's reference data table (RDT).

### List of reference numerals:

- AED: anonymised event data
- AEDT: anonymised event data table
- CDI, CDI2: control data export interface (to output control data)
- CDR: call data record
- CM: counting means
- DCI: result export interface (to output derived counts)
- DD: derived data
- DDT: derived data table
- EDR: event data record
- LXT: first load extractor
- MNI, MNI2: mobile network facing interface
- PE: database production environment
- PQPM: programmable query processing means
- QPI, QPI2: query processing import interface
- QTI, QTI2: query trigger interface
- RDI, RDI2: reference data interface
- RD: reference data
- RDT, RDT2: reference data table
- SDD: sample derived data
- SDDT: sample derived data table
- SED: sampled event data
- SEDT: sample event data table
- SPQPM: secondary programmable query processing means
- SLXT: second load extractor
- TE: database test environment
- VM: validation means to validate the result of the counting operations

## Claims

1. System solution for derivation and provision of anonymised cellular mobile network data for population density and mobility report generation, comprising at least one first load extractor (LXT), and at least one database production environment (PE),
**characterised in that**
a. the first load extractor (LXT) is connected with the mobile network and the production environment (PE), and is configured to perform at least the functions of
(i) receiving event data comprising identifiers and other data from the mobile network,
(ii) anonymising the identifiers of the event data,
(iii) transmitting the event data with anonymised identifiers (anonymized event data) to the database production environment (PE),
b. the production environment (PE) comprises at least
(i) an anonymised event data table (AEDT), which is configured to hold anonymised event data (AED),
(ii) a derived data table (DDT), which is configured to hold derived data (DD),
(iii) programmable query processing means (PQPM), which is configured to store queries and issue query requests regarding at least data contained in the anonymised event data table (AEDT) and/or the derived data table (DDT)
(iv) a query processing import interface (QPI), configured to import queries to the programmable query processing means (PQPM) from outside the database production environment (PE),
(v) a query trigger interface (QTI) to trigger query requests of the programmable query processing means (PQPM) from outside the database production environment (PE)
(vi) counting means (CM), configured to perform counting operations within the derived data table (DDT), and
(vii) a result export interface (DCI) configured to export the results of the counting operations outside the database production environment (PE) c. the solution comprises functionality for user rights management, to allow a user or a group of users of a third party access to the query processing import interface (QPI), the query trigger interface (QTI) and the result export interface (DCI) while at the same time disallow any direct reading, writing or executing access to the load extractor (LXT), the anonymised event data table (AEDT), the derived data table (DDT) and the counting means (CM).

2. The system solution according to claim 1,
**characterized in that**
the production environment (PE) comprises validation means (VM), configured to decide if export of the results of the counting operations would be in compliance with privacy requirements, and where the production environment (PE) is configured to export the results of the counting operations via the result export interface (DCI) only in case that the validation means (VM) have decided that output of the counting operations would be in compliance with privacy requirements.

3. The system solution according to claim 2,
**characterized in that**
the validation means (VM) decide that export of the results of the counting operations would be in compliance with privacy requirements only when the output of the counting operation exceeds a predetermined threshold.

4. The system solution according to one of the claims 1 to 3,
**characterized in that**
the database production environment (PE) is configured such that anonymised event data (AED) which is older than a specified period of time, will be automatically deleted from the database production environment (PE) respectively from the anonymised event data table (AEDT).

5. The system solution according to one of the claims 1 to 4,
**characterized in that**
the load extractor (LXT) performs the anonymisation of the event data by using a secure hash algorithm to anonymise the identifiers, and where an encryption key is used to irreversibly anonymise the identifiers of the event data and where the encryption key preferably is frequently changed.

6. The system solution according to one of the claims 1 to 5,
**characterized in that**
the database production environment (PE) comprises a control data export interface (CDI) configured to export control data regarding the status of the production environment (PE) outside the database production environment (PE).

7. System solution according to one of the claims 1 to 6,
**characterized in that**
a. the database production environment (PE) further comprises
(i) a reference data table (RDT), which is configured to hold reference data (RD),
(ii) a reference data interface (RDI), configured to upload reference data (RD) to the reference data table (RDT) from outside the database production environment (PE), and
b. the programmable query processing means (PQPM) is configured to issue query requests regarding also the data contained in the reference data table (RDT).

8. System solution according to claim 7,
**characterized in that**
the reference data (RD) includes cell plan data which describes the radio cells and the corresponding coverage areas of the radio cells of the mobile network.

9. System solution according to one of the claims 1 to 8,
**characterized in that**
it further comprises a second load extractor (SLXT) having an input interface and an output interface, and a database test environment (TE) to enable a third party to develop and test queries with realistic data, where
a. the second load extractor (SLXT) is
(i) at the input interface connectable with the mobile network or with the anonymised event data table (AEDT) of the production environment (PE) to receive event data, and
(ii) connectable at the output interface with the test environment (TE),
b. the second load extractor (SLXT) is configured to perform at least the functions of
(i) receiving event data comprising identifiers, timestamps and other data either directly or indirectly from the mobile network,
(ii) selecting samples of the event data
(iii) anonymising the identifiers of at least the selected samples of the event data, at least in case the identifiers are not already anonymised,
(iv) modifying the dates in the timestamps of the events
(v) transmitting the sampled event data with anonymised identifiers and modified timestamps to the database test environment (TE),
c. the test environment (TE) is comprises at least
(i) a sample event data table (SEDT), which is configured to hold sample event data (SED),
(ii) a sample derived data table (SDDT), which is configured to hold sample derived data (SDD),
(iii) secondary programmable query processing means (SPQPM), which is configured to store queries and issue query requests regarding at least data contained in the sample event data table (SEDT) and/or the sample derived data table (SDDT)
d. the user rights management system of the solution, is further set up to allow a user or a group of users of a third party access to the database test environment (TE) including the sample event data table (SEDT), the sample derived data table (SDDT) and the secondary programmable query processing means (SPQPM) while at the same time disallow any direct reading, writing or executing access to the second load extractor (SLXT).

10. System solution according to claim 9,
**characterized in that**
the solution comprises means to transfer queries from the test environment (TE) to the production environment (PE).

11. System solution according to one of the claims 9 or 10,
**characterized in that**
both, the database production environment (PE) and the test environment (TE) are hosted in the same data warehouse system.

12. Method for derivation and provision of anonymised cellular mobile network data for population density and mobility report generation,
**characterised in that**
a. event data comprising identifiers and other data is received from a mobile network,
b. the identifiers of the event data are anonymised and
c. the anonymised event data (AED) is transmitted to a database production environment (PE),
d. the anonymised event data (AED), is held in at least one anonymised event data table (AEDT),
e. at least one query regarding at least data contained in at least one anonymised event data table (AEDT) is imported to a programmable query processing means (PQPM) from outside the database production environment (PE) and stored in the programmable query processing means (PQPM)
f. a query request is triggered to issue an in the programmable query processing means stored query regarding at least one anonymised event data table (AEDT)
g. the result of the query request is stored as derived data (DD) at a derived data table (DDT)
h. a counting operation within the derived data table (DDT) is performed and the result of the counting operation is exported outside the database production environment.

13. Method according to claim 12,
**characterized in that**
reference data (RD) is uploaded to a reference data table (RDT) from outside the database production environment (PE), and the query regards also data contained in the reference data table (RDT).

14. Method according to one of the claims 12 or 13,
**characterized in that**
a. event data comprising identifiers, timestamps and other data is received either directly or indirectly from a mobile network,
b. samples of the event data are selected,
c. the identifiers of at least the selected samples of the event data are anonymised, at least in case the identifiers are not already anonymised,
d. the dates in the timestamps of the events are modified, and
e. the sampled event data (SED) with anonymised identifiers and modified timestamps is transmitted to a database test environment (TE),
f. the sampled event data (SED) is held in at least one anonymised event data table (SEDT),
g. at least one query regarding at least data contained in at least one sampled event data table (SEDT) is imported to a secondary programmable query processing means (SPQPM),
h. said at least one query regarding at least data contained in at least one sampled event data table (SEDT) is issued by a query request
i. the result of the query request is stored as derived data (SDD) at a derived data table (SDDT)

15. A computer program including software commands for executing a method according to one of the claims 12 to 14, when the computer program is executed in a data processing system.
